Europäisches Patentamt

European Patent Office

Office européen des brevets

(11) Publication number: **0 051 406**

**A1**

(12) **EUROPEAN PATENT APPLICATION**

(21) Application number: 81304989.7

(22) Date of filing: 23.10.81

(51) Int. Cl.³: **G 11 B 25/06**
**H 04 N 5/76**

(30) Priority: 27.10.80 US 201053

(43) Date of publication of application:
12.05.82 Bulletin 82/19

(84) Designated Contracting States:
AT DE FR GB

(71) Applicant: RCA CORPORATION
30 Rockefeller Plaza
New York, NY 10020(US)

(72) Inventor: Warren, Henry Ray
106 Knickerbocker Drive
Belle Mead Somerset New Jersey 08502(US)

(74) Representative: Pratt, Richard Wilson et al,
50 Curzon Street
London W1Y 8EU(GB)

(54) Video tape recorder and combined television camera and video tape recorder.

(57) A video tape recorder (VTR) espcially a portable VTR is subject to swinging motions about an axis (316) due to being supported from a shoulder strap (312). The motions impart perturbing accelerations to the rotational elements such as the headwheel (318) which define the placement of television signals on the video tape, resulting in time base errors on reproduction. In order to reduce the effects of such accelerations the axis (32) of rotation of the headwheel is orthogonal to the swing axis (316).

In a combined television camera and VTR the axis of rotation of the rotational elements (420, 426, 432) are parallel to the optical axis (416) of the camera to reduce the affects of horizontal and vertical panning.

Fig.3

Fig.4

## VIDEO TAPE RECORDER AND COMBINED TELEVISION
## CAMERA AND VIDEO TAPE RECORDER

This invention relates to a video tape recorder (VTR) suitable for use with a television camera for recording television signals on a recording tape and including at least one rotational element which defines the placement of the signals on the tape, and also relates to such a recorder combined with a television camera.

In, for example, electronic news gathering (ENG) it is customary to use a television camera to produce video signals representing the scene. Since facilities for transmitting the video signals to a studio are often not available, it is customary to use a portable VTR to record the video signals for processing at a studio at a later time. The VTR may be carried by an operator slung from a strap over the operator's shoulder or may be incorporated in the camera.

It has been discovered that the video signals recorded on such a properly operating portable VTR are often subject to time-base errors. Investigation has revealed that these time-base errors result from accelerations imparted to the body of the VTR due to the manner of carrying the VTR. These accelerations create relative motions between the body of the VTR and the headwheel or capstan. The headwheel and capstan normally control the placement of the video signals on the tape. In order to achieve the desired regular placement of the signals on the tape, electrical servo systems drive the headwheel and the capstan. These servo systems often include frequency and phase comparisons of the headwheel or capstan rotation with a reference signal which is derived from a stable source such as a crystal oscillator or vertical sync. The servo systems are generally configured as phase-lock loops which for stability include low-pass filters. These low-pass filters limit the rate of response of the servo loops. Also limiting the maximum correction rate of the headwheel or capstan servo loops is the limited energy available from the batteries which power the portable VTR. The physical accelerations imparted to the portable VTR affect the rotational position of headwheel and capstan relative to the VTR body, and the accelerations are at a rate which cannot be followed or corrected instantaneously by the servo loops. This results in the time-base errors such as changes in the duration of the vertical interval which affect the synchronization of the signals on playback. It is desirable to at least reduce these time-base errors.

A video tape recorder in accordance with the invention is characterised in that the axis of rotation (20) of at least that one element (18) is aligned orthogonal to an axis of rotation or oscillation (16) to which the recorder will subject in operation.

For a better understanding of the invention, reference will now be made by way of example to the accompanying drawings; in which:

FIGURE 1 illustrates a prior art portable VTR slung from the shoulder;

FIGURE 2 illustrates a prior art servo loop for controlling the headwheel speed;

FIGURE 3 illustrates a portable VTR according to the invention; and

FIGURE 4 illustrates a portable camera - VTR combination in accordance with the invention, with portions thereof cutaway.

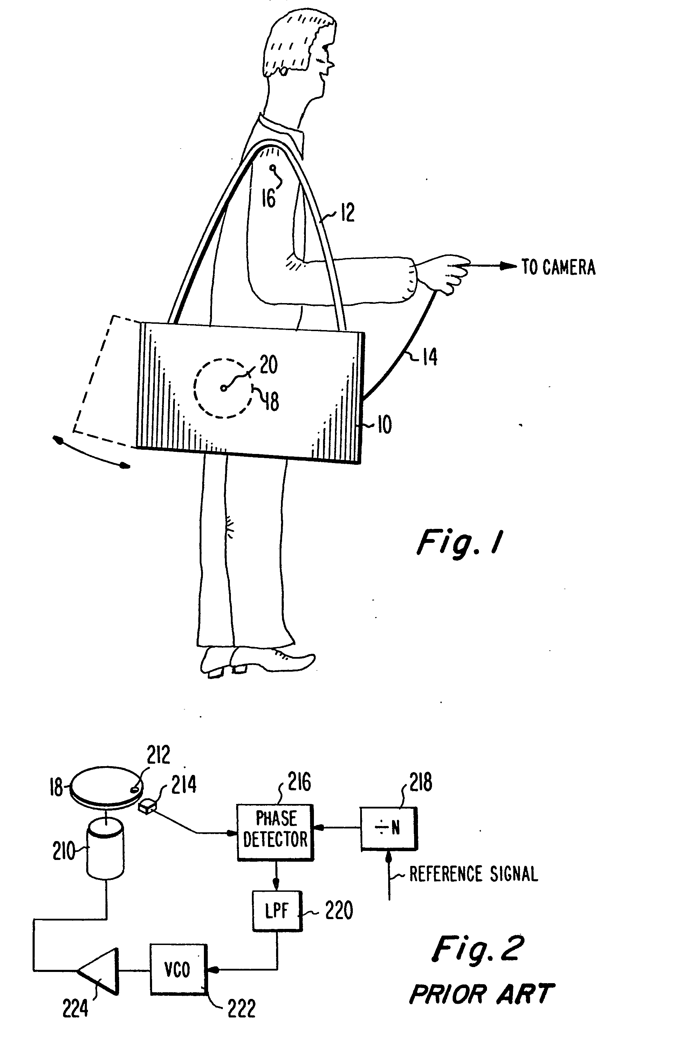

In FIGURE 1, a VTR 10 is shown as a box suspended by a strap 12 from the shoulder of a camera crew member. He holds in his hand a cable coupled to the VTR and to a camera (not shown) operated by another member of the camera crew. When the VTR is carried either at a walk or at a run, it tends to swing forward and backward relative to the bearer. This imparts a rotational acceleration and motion to the VTR relative to an axis 16. A rotating component in the tape transport and scanning system such as a headwheel 18 of the VTR, shown by phantom lines, has an axis 20 substantially parallel to axis 16. If the headwheel were not spinning but had substantial inertia, as if it were a flywheel, it is easy to see that the swinging motion of the VTR body would cause a periodic relative acceleration and change in position of the headwheel. The fact that the headwheel is spinning does not change the existence of this acceleration due to the swinging motion.

FIGURE 2 illustrates in block diagram form, a servo loop for the control of headwheel rotation. In FIGURE 2, headwheel 18 is driven by a motor 210. Headwheel 18 includes a marker 212 positioned on its periphery which couples a "once-around" signal to a sensor 214. The once-around signal is coupled to one input of a phase detector 216 for comparison with reference signals from a source (not shown) divided in frequency by a divider 218. The phase detector 216 produces a signal indicative of the relative frequency and phase of the headwheel position and the reference signal. The output error signal of the phase detector is coupled by way of a low-pass filter 220 to a voltage-controlled oscillator (VCO) 222 which produces an output signal the frequency of which depends upon the average value of the error signal. The VCO output signal is amplified by a drive circuit 224 and applied to motor 210 for feedback control of the position of the headwheel relative to the reference signal. The swinging motion of the VTR, as described in conjunction with FIGURE 1, causes periodic changes in the error signal from phase detector 216. Large physical accelerations cause rates of change of the error signal which represent frequencies of the skirts of the response of low-pass filter 220. The gain of the servo loop is reduced for such large rates of change, and the correction occurs slowly. Also, even if the phase detector and VCO call for a rapid acceleration of the headwheel, the battery-operated drive circuit may not be able to supply the required drive power for rapid acceleration.

Consequently, the headwheel phase can vary due to physical rotational acceleration, and the phase variation can cause the sync signals recorded on the tape to occur with irregular spacing. This causes synchronization problems on playback.

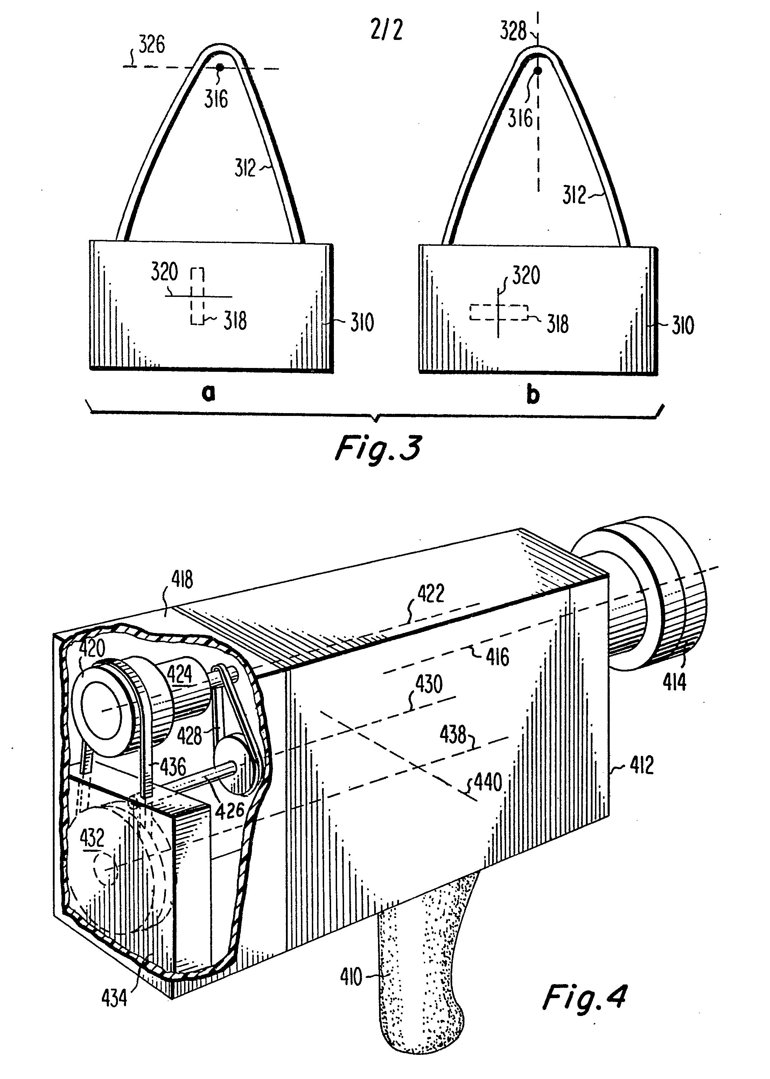

In accordance with the examples of the invention shown in Figures 3a and 3b, the axis of the headwheel and/or the axes of other speed-control rotational members such as capstans and tape reels, are positioned orthogonally to the axes of the expected rotational motions as shown in FIGURES 3a and 3b. The capstan drives the tape and changes in the capstan velocity affect the tape velocity and therefore affect the placement of the video signals on the tape. The tape speed is also affected by the tape tension. Under conditions of rotational acceleration, the tape supply and takeup reels may be accelerated and may change the tape tension, thereby affecting the tape speed. Pursuant to the examples of the invention shown in Figure 3a, the headwheel 318 can be located to rotate about an axis 320 which is parallel to a line 326 which lies in the plane of the paper and is therefore orthogonal to axis 316 which is perpendicular to the paper. Similarly, axis 320 in Figure 3b is parallel to a line 328 orthogonal to axis 316.

A camera-VTR combination such as may be used for electronic news gathering (ENG) is shown in FIGURE 4. In FIGURE 4, the combination has a handle 410 to which is affixed a camera portion 412 having an optical lens assembly 414 with an optical axis 416. Also coupled to handle 410 at the rear of the unit is a tape recorder portion 418. In addition to the usual electronic apparatus, tape recorder portion 418 includes a headwheel 420 visible through a cutaway portion of the housing. The axis 422 of headwheel 420 is parallel to axis 416 of the lens assembly. Headwheel 420 is driven by a motor 424. Motor 424 also drives a capstan 426 by way of a belt 428 (capstan may be driven by separate motor). The axis 430 of capstan 426 is also parallel to axis 416 of the lens assembly. Coaxial tape reels 432 are located inside a tape cassette cartridge 434, and the tape 436 is looped over the headwheel. The axis 430 of reels 432 is also parallel with axis 416 of the lens assembly.

The arrangement of FIGURE 4 optimizes the placement of the axes of the rotational elements in view of the expected motion of the camera. A camera-recorder combination when viewing a still scene will not impart accelerations. Such a combination may be used to view a broad horizontal expanse by rotational motion about a vertical axis known as "panning". Such panning motions may be rapid, as where following the action on an automobile racetrack.  The axes 422, 430 and 438 of the rotational components of the tape recorder in FIGURE 4 are orthogonal to the rotational axis in such horizontal panning and hence are not accelerated.

Such camera combinations may also be used for vertical "panning", as when following the action when a person jumps from a building into a fireman's net.  In such a vertical panning motion the rotation is about a horizontal axis illustrated as 440 in FIGURE 4.  The position of axes 422, 430 and 438 in FIGURE 4 are also orthogonal to horizontal axis 440, and consequently no accelerations are imparted to the rotational components due to the vertical panning.  Since no accelerations are imparted to the rotational components of the camera upon vertical or horizontal panning with the orientation of the axes as shown, the positioning of the video signals on the tape is un-affected by panning and the playback synchronization is not perturbed.

CLAIMS:

1. A video tape recorder suitable for use with a television camera for recording television signals on a recording tape and including at least one rotational element which defines the placement of the signals on the tape, characterised in that the axis of rotation (20) of at least that one element (18) is aligned orthogonal to an axis of rotation or oscillation (16) to which the recorder will be subject in operation.

2. A recorder according to claim 1, wherein the said one element comprises a headwheel (18).

3. A recorder according to claim 1 or 2, wherein there are a plurality of said rotational elements, the axes of rotation of all of which are aligned parallel to said one element.

4. A recorder according to claim 1, 2 or 3, wherein the axis of rotation of the or each rotational element (18) is orthogonal both to said axis of, and the plane containing said axis of, rotation or oscillation to which the recorder will be subject in operation.

5. A recorder according to claim 1, 2 or 3 wherein the axis of rotation of the or each rotational element is orthogonal to said axis of, and parallel to the plane containing the said axis of, rotation or oscillation to which the recorder will be subject in operation.

6. A recorder according to claim 1, 2, 3, 4 or 5 which is a portable video tape recorder having a shoulder strap (12) defining the said axis of rotation or oscillation (16) to which the recorder will be subject in operation.

7. A television camera combined with a video tape recorder according to claim 1, 2, 3, 4, 5 or 6 (Fig. 4).

8. A television camera combined in a common housing with a video tape recorder (Fig. 4) according to claim 1, 2 or 3, wherein the said one (420) or each (420, 432, 424) rotational element is aligned substantially parallel to the optical axis (416) of the camera.

9. A combination according to claim 8, wherein the said rotational elements comprise a headwheel (420) around which the tape travels in operation, and a capstan (426) for moving the tape, the axes of rotation of the capstan and headwheel being parallel to said optical axis.

10. A combination according to claim 8 or 9, wherein the said rotational elements comprise means defining an axis of rotation of a tape reel (432) which is parallel to said optical axis and for rotating the tape reel about its axis of rotation.

TO CAMERA

*Fig.1*

PHASE DETECTOR

÷ N

REFERENCE SIGNAL

LPF

VCO

*Fig.2*

*PRIOR ART*

Fig.3

Fig.4

European Patent
Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US - A - 4 057 830 (W.A. ADCOCK)<br><br>* Column 8, line 39 - column 9, line 18; figures 8-10 * | 1,3,7 8,10 | G 11 B 25/06<br>H 04 N 5/76 |
| X | DE - A - 2 802 670 (R. BOSCH)<br><br>* Pages 3-5; figure 1 * | 1-3,7- 10 | |
| A | US - A - 4 081 850 (R.D. WALDEN)<br><br>* Figures * | 1,6 | **TECHNICAL FIELDS SEARCHED (Int.Cl.3)** |
| A | US - A - 4 080 638 (S.A. PLATT) | 1 | G 11 B 25/06<br>31/00<br>H 04 N 5/76<br>G 11 B 1/00 |
| A | US - A - 3 916 122 (M. SATO) | 1 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search | Date of completion of the search | Examiner |
| The Hague | 01-02-1982 | DECLAT |

EPO Form 1503.1 06.78